# EUROPEAN PATENT SPECIFICATION

(11) **EP 0 312 184 B1**
(45) Date of publication and mention of the grant of the patent: **10.02.1993**
(21) Application number: 88301456.5
(22) Date of filing: 22.02.1988
(51) Int. Cl.: F16J 15/36, F16J 3/04

(54) **Improved bellows mechanical seal with inactive diaphragms**
Balggleitringdichtung mit inaktiven Membranen
Joint mécanique à soufflets avec diaphragmes inactifs

(30) Priority: 13.10.1987 US 107334
(43) Date of publication of application: 19.04.1989
(73) Proprietor: BW/IP INTERNATIONAL INC., Long Beach California 90802-4371 (US)
(72) Inventor: Wentworth, Robert Seabury, deceased (US)
(74) Representative: Allden, Thomas Stanley

(56) References cited:
- FR-A- 975 457
- FR-A- 1 328 377
- GB-A- 1 060 955
- US-A- 1 727 281
- US-A- 3 372 939
- US-A- 3 394 631
- US-A- 3 776 560
- US-A- 4 163 563
- US-A- 4 365 816
- US-A- 4 453 722

## Description

This invention relates to bellows type mechanical seal assemblies.

In US-A-3776560 there is generally disclosed a bellows type mechanical seal assembly surrounding a rotatable shaft and having a non-rotatable seal ring and a rotatable seal ring, means connecting the rotatable seal ring to the shaft, the seal rings having lapped seal faces opposing one another so as to be relatively rotating when the shaft rotates, and a resilient means comprising a metal bellows for urging at least one of the seal rings axially towards the other seal ring, the bellows being constructed of a plurality of annular diaphragms in stacked relationship with the next adjacent ones connected at their radially outer and inner extremities to form a series of radially outer and inner joints and with a radial extremity of the axially outermost diaphragms free of a joint, the bellows having a connection at one end to the connecting means and a connection at the other end to the rotatable seal ring.

More particularly, in the aforesaid bellows type mechanical seal assembly, the free radial extremity of one axially outermost diaphragm at one end of the bellows is connected to a bellows support member which in turn is connected to the shaft while the free radial extremity of the other axially outermost diaphragm at the opposite end of the bellows is connected to a ferrule surrounding and supporting the rotatable seal ring.

In accordance with the present invention as claimed, the generally disclosed bellows type mechanical seal assembly of US-A-3776560 is characterised in that said connection at one end or the other end of the bellows is at the joint formed by the radial extremities of the respective axially outermost diaphragm and the next adjacent diaphragm, the opposite radial extremity of the respective axially outermost diaphragm being said radial extremity which is free of a joint and being unconnected to and positioned between said next adjacent diaphragm and the connecting means or the rotatable seal ring as the case may be so that the respective axially outermost diaphragm serves as an inactive diaphragm at the respective end of the bellows.

By providing an "inactive diaphragm" at at least one end of the bellows and, preferably, an inactive or non-functional diaphragm at both ends of the bellows, the end convolutions of the bellows receive mechanical support similar to that received by the other convolutions of the bellows, so that the pressure resisting capacity of the bellows is increased when compared to the bellows disclosed in the aforesaid US-A-3776560.

Preferably, the connection at each of the ends of the bellows is at the radially outer joint formed by the radially outer extremities of the axially outermost diaphragm and the next adjacent diaphragm, each of the axially outermost diaphragms having a free radially inner extremity.

The series of radially outer and inner joints are preferably welds joining the radial extremities of the adjacent diaphragms together.

At high pressures, in the absence of this invention, the pressure capacity of nested ripple metal bellows is increased if the bellows is operated at relatively close pitch, so that the diaphragms can rest against each other, limiting the unsupported part of the bellows. Common practice is to simply provide clearances for the ripples of the axially outermost diaphragms. These diaphragms are then subject to higher stress than the remainder of the bellows. By minimizing this clearance and providing the non-functional or inactive diaphragms at each end of the bellows, the unsupported area is minimised and the pressure capacity of the seal is enhanced.

Attention is also drawn to US-A-3372939, US-A-4163563, US-A-4365816 and US-A-4453722, each of which discloses a metal bellows constructed of a plurality of stacked annular members or diaphragms welded together with their free ends connected to structure of the seal assembly.

Attention is further drawn to US-A-1727281 showing a metal bellows constructed of tubular metal with reinforced end flanges which are reinforced by extra sections folded back against the next adjacent section. The bellows is used in a valve structure.

In order that the invention may be well understood there will now be described a preferred embodiment thereof, given by way of example, reference being made to the accompanying drawings, in which:
Figure 1 is an axial sectional view of a bellows type mechanical seal assembly embodying the invention; and
Figure 2 is a partial axial sectional and enlarged view of the bellows illustrated in Figure 1.

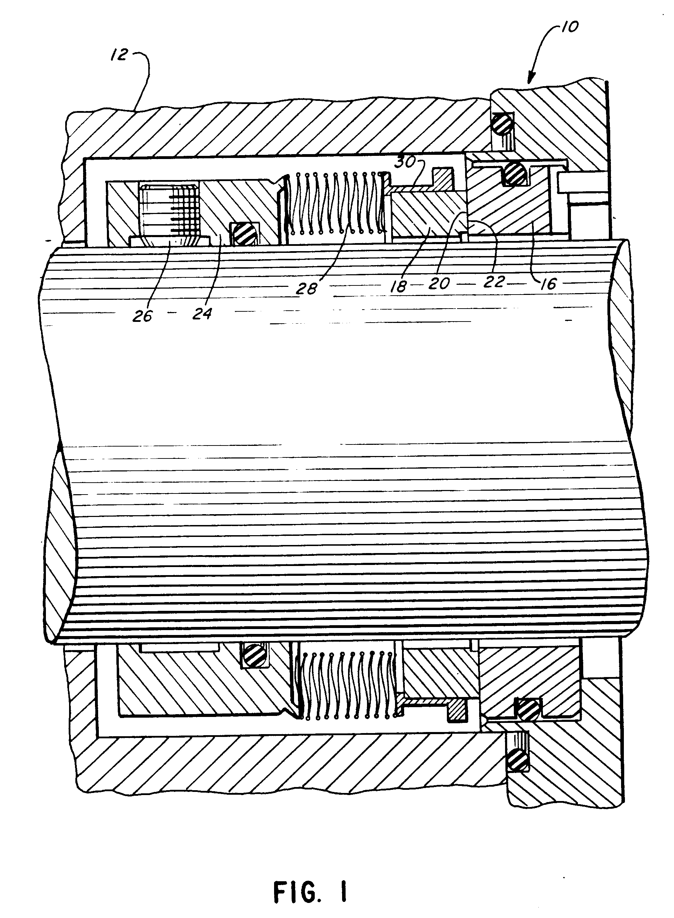

Referring first to Figure 1, there is illustrated a bellows type mechanical seal assembly 10 positioned within a housing 12 and surrounding a shaft 14 passing through the housing. The seal assembly 10 comprises a non-rotatable seal ring 16 and a rotatable seal ring 18, the seal rings having lopped and opposing seal faces 20 and 22. The seal ring 18 is rotatably connected to the shaft 14 for rotation therewith by a metal cylindrical support member 24, connected to the shaft 14 by one or more set screws 26, and a bellows 28 connected at one end to the support member 24 and at the other end to a metal ferrule 30 surrounding and supporting the seal ring 18, the ferrule 30 being shrink fitted around the seal ring 18. The bellows 28, as in the conventional bellows seal, resiliently urges the seal ring 18 toward the seal ring 16.

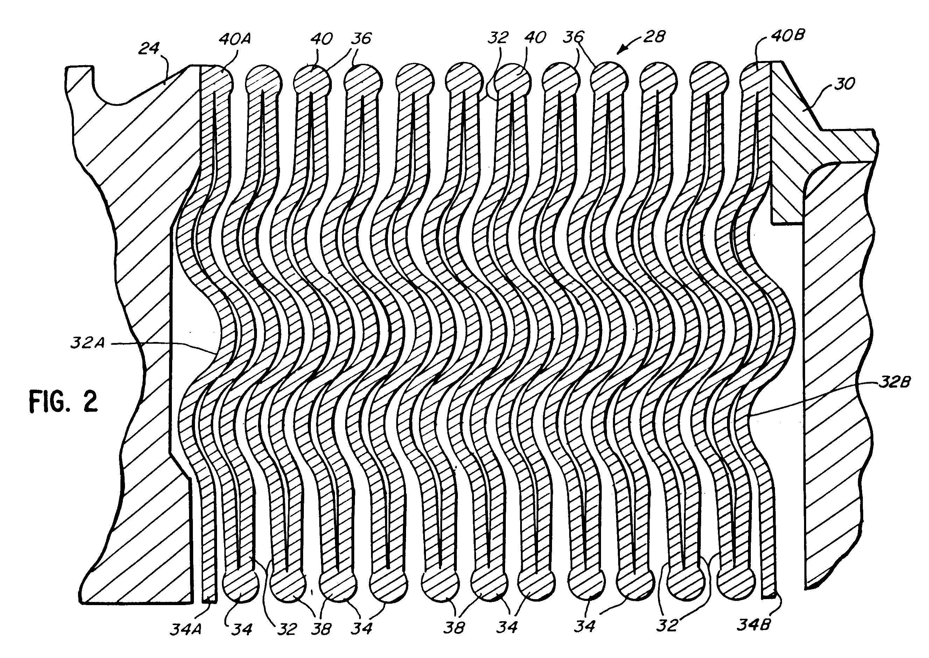

Figure 2 illustrates details of the bellows 28 which comprises a plurality of stacked, rippled metal annular diaphragms 32 joined at their radially inner and outer extremities 34 and 36 by welding to form a series of radially inner and outer joints 38 and 40. The end or axially outermost diaphragms 32A, 32B have their radially inner extremities 34A, 34B free of a joint and being unconnected to and positioned between the next adjacent diaphragm 32 and, respectively, the support member 24 and the rotatable seal ring 18 while the end joints 40A, 40B formed by the radial outer extremities 36 of the respective axially outermost diaphragm 32A, 32B and the next adjacent diaphragm 32 are connected, as by welding, to the support member 24 at one end and the ferrule 30 at the other end. Thus the end diaphragms 32A, 32B are inactive or non-functional in the bellows construction.

The structure just described provides support for the closely adjacent diaphragms 32 of the bellows 28, thus increasing the pressure capacity of the bellows. With this arrangement, all functioning diaphragms (those except diaphragms 32A and 32B) of the bellows 28 receive substantially equal mechanical support.

While the rotating seal ring 18 described above is connected directly to the shaft 14, it is to be understood that the rotating seal ring structure can be assembled onto a cylindrical sleeve to be received on and connected by suitable means to a rotatable shaft.

## Claims

1. A bellows type mechanical seal assembly surrounding a rotatable shaft (14) and having a non-rotatable seal ring (16) and a rotatable seal ring (18), means (24) connecting the rotatable seal ring (18) to the shaft (14), the seal rings (16, 18) having lapped seal faces (20, 22) opposing one another so as to be relatively rotating when the shaft (14) rotates, and a resilient means (28) comprising a metal bellows (28) for urging at least one (18) of the seal rings (16, 18) axially towards the other seal ring (16), the bellows (28) being constructed of a plurality of annular diaphragms (32) in stacked relationship with the next adjacent ones connected at their radially outer (36) and inner (34) extremities to form a series of radially outer (40) and inner (38) joints and with a radial extremity (34A, 34B) of the axially outermost diaphragms (32A, 32B) free of a joint (38, 40), the bellows (28) having a connection at one end to the connecting means (24) and a connection at the other end to the rotatable seal ring (18), characterised in that said connection at one end or the other end of the bellows (28) is at the joint (40A, 40B) formed by the radial extremities (36) of the respective axially outermost diaphragm (32A, 32B) and the next adjacent diaphragm (32), the opposite radial extremity (34A, 34B) of the respective axially outermost diaphragm (32A, 32B) being said radial extremity (34A, 34B) which is free of a joint and being unconnected to and positioned between said next adjacent diaphragm (32) and the connecting means (24) or the rotatable seal ring (18) as the case may be so that the respective axially outermost diagraphgm (32A, 32B) serves as an inactive diaphragm at the respective end of the bellows (28).

2. A bellows type mechanical seal assembly as claimed in claim 1, wherein the diaphragms (32, 32A, 32B) are wavy annular members.

3. A bellows type mechanical seal assembly as claimed in claim 1 or claim 2, wherein said connection at each of the ends of the bellows (28) is at the respective joint (40A, 40B) formed by the radial extremities (36) of the respective axially outermost diaphragm (32A, 32B) and the next adjacent diaphragm (32) by which each of the axially outermost diaphragms (32A, 32B) serves as an inactive diaphragm at the respective opposite ends of the bellows (28), one such inactive diaphragm (32A) being adjacent said connecting means (24) and the other such inactive diaphragm (32B) being adjacent the rotatable seal ring (18).

4. A bellows type mechanical seal assembly as claimed in claim 3, wherein each of the respective joints (40A, 40B) is a radially outer joint (40A, 40B) formed by the radially outer extremities (36) of the axially outermost diaphragm (32A, 32B) and the next adjacent diaphragm (32), each of the axially outermost diaphragms (32A, 32B) having a free radially inner extremity (34A, 34B) and thereby serving as an inactive diaphragm.

5. A bellows type mechanical seal assembly as claimed in claim 3 or claim 4, wherein the bellows (28) is welded at its said one end to the connecting means (24) and at its said other end to means (30) connected to the rotatable seal ring (18).

6. A bellows type mechanical seal assembly as claimed in claim 3 or claim 4, further comprising a cylindrical ferrule (30) surrounding and joined to the rotatable seal ring (18), the bellows (28) being connected at its said other end to the ferrule (30).

## Patentansprüche

1. Balg-Gleitringdichtung, die eine drehbare Welle (14) umgibt und einen drehfesten Dichtring (16) und einen drehbaren Dichtring (18) aufweist, wobei Verbindungsmittel (24) den drehbaren Dichtring (18) mit der Welle (14) verbinden, wobei die Dichtringe (16,18) einander zugewandte geläppte Dichtflächen (20,22) aufweisen, die bei einer Drehung der Welle (14) relativ zueinander umlaufen, und elastische Mittel (28) in Form eines Balgs (28) mindestens einen (18) der Dichtringe (16,18) axial gegen den anderen Dichtring (16) drücken, wobei der Balg (28) aus mehreren ringförmigen Membranen (32) in Stapelformation aufgebaut ist, wobei die unmittelbar aneinander angrenzenden Membranen an ihren radial äußeren (36) und inneren (34) Enden verbunden sind, um eine Reihe radial äußerer (40) und innerer (38) Anschlüsse zu bilden und ein radiales Ende (34A, 34B) der axial äußersten Membranen (32A, 32B) ohne Anschluß (38,40) ausgebildet ist und der Balg (28) am einen Ende eine Verbindung mit den Verbindungsmitteln (24) und am anderen Ende eine Verbindung mit dem drehbaren Dichtring (18) besitzt,
dadurch **gekennzeichnet,**
daß sich die Vebindung am einen oder anderen Ende des Balges (28) an dem Anschluß (40A, 40B) befindet, der von den radialen Enden (36) der entsprechenden axial äußersten Membran (32A, 32B) und der nächsten angrenzenden Membran (32) gebildet wird, wobei das entgegengesetzte radiale Ende (34A, 34B) der entsprechenden axial äußersten Membran (32A, 32B) das besagte radiale Ende (34A, 34B) ist, das ohne Anschluß ausgebildet ist und zwischen der nächsten angrenzenden Membran (32) und den Verbindungsmitteln (24) bzw. dem drehbaren Dichtring (18) angeordnet und mit diesem unverbunden ist, so daß die entsprechende axial äußerste Membran (32A, 32B) als inaktive Membran des entsprechenden Endes des Balges (28) dient.

2. Balg-Gleitringdichtung nach Anspruch 1,
bei der die Membranen (32,32A,32B) gewellte ringförmige Teile sind.

3. Balg-Gleitringdichtung nach Anspruch 1 oder 2,
bei der die Verbindung an jedem der Enden des Balges (28) sich an dem entsprechenden Anschluß (40A, 40B) befindet, der von den radialen Enden (36) der entsprechenden axial äußersten Membran (32A, 32B) und der nächsten angrenzenden Membran (32) gebildet wird, wodurch jede der axial äußersten Membranen (32A, 32B) als inaktive Membran an den entsprechenden entgegengesetzten Enden des Balges (28) dient, wobei eine derartige inaktive Membran (32A) neben den Verbindungsmitteln (24) und die andere inaktive Membran (32B) neben dem drehbaren Dichtring (18) liegt.

4. Balg-Gleitringdichtung nach Anspruch 3,
bei der jeder der entsprechenden Anschlüsse (40A, 40B) ein radial äußerer Anschluß (40A, 40B) ist, der von den radial äußeren Enden (36) der axial äußersten Membran (32A, 32B) und der nächsten angrenzenden Membran (32) gebildet wird, wobei jede der axial äußersten Membranen (32A, 32B) ein freies, radial inneres Ende (34A, 34B) besitzt und somit als inaktive Membran dient.

5. Balg-Gleitringdichtung nach Anspruch 3 oder 4,
bei der der Balg (28) an seinem besagten einen Ende mit den Verbindungsmitteln (24) und an seinem besagten anderen Ende mit Mitteln (30) verschweißt ist, die mit dem drehbaren Dichtring (18) verbunden sind.

6. Balg-Gleitringdichtung nach Anspruch 3 oder 4,
gekennzeichnet durch einen zylindrischen Endring (30), der den drehbaren Dichtring (18) umgibt, der den drehbaren Dichtring (18) umgibt und mit diesem verbunden ist, wobei der Balg (28) an seinem besagten anderen Ende mit dem Endring (30) verbunden ist.

## Revendications

1. Ensemble d'étanchéité mécanique du type à soufflet entourant un arbre mobile en rotation (14) et comportant une bague d'étanchéité (16) immobilisée en rotation et une bague d'étanchéité (18) mobile en rotation, un moyen (24) reliant la bague d'étanchéité mobile en rotation (18) à l'arbre (14), les bagues d'étanchéité (16, 18) ayant des faces d'étanchéité rodées (20, 22) se faisant face l'une à l'autre de manière à tourner l'une par rapport à l'autre lorsque l'arbre (14) tourne, et un moyen élastique (28) comprenant un soufflet métallique (28) pour pousser au moins l'une (18) des bagues d'étanchéité (16, 18) axialement en direction de l'autre bague d'étanchéité (16), le soufflet (28) étant fait d'une pluralité de diaphragmes annulaires (32) dans une disposition empilée, les diaphragmes adjacents suivants étant connectés au droit de leurs extrémités radialement extérieures (36) et intérieures (34) pour former une série de jonctions radialement extérieures (40) et intérieures (38), et une extrémité radiale (34A, 34B) des diaphragmes axialement les plus à l'extérieur (32A, 32B) étant exempte de jonction (38, 40), le soufflet (28) ayant une liaison à une extrémité avec un moyen de liaison (24) et une liaison à l'autre extrémité avec la bague d'étanchéité mobile en rotation (18), caractérisé en ce que ladite liaison à l'une des extrémités ou à l'autre extrémité du soufflet (28) se trouve au droit de la liaison (40A, 40B) formée par les extrémités radiales (36) du diaphragme axialement le plus à l'extérieur (32A, 32B) respectif et du diaphragme adjacent suivant (32), l'extrémité radiale opposée (34A, 34B) du diaphragme axialement le plus à l'extérieur (32A, 32B) respectif étant ladite extrémité radiale (34A, 34B) qui est exempte de jonction et qui est non reliée et placée entre ledit diaphragme adjacent suivant (32) et le moyen de liaison (24), ou la bague d'étanchéité mobile en rotation (18), selon le cas, de sorte que le diaphragme axialement le plus à l'extérieur (32A, 32B) respectif sert de diaphragme inactif au droit de l'extrémité respective du soufflet (28).

2. Ensemble d'étanchéité mécanique du type à soufflet selon la revendication 1, dans lequel les diaphragmes (32, 32A, 32B) sont des éléments annulaires ondulés.

3. Ensemble d'étanchéité mécanique du type à soufflet selon la revendication 1 ou la revendication 2, dans lequel ladite liaison au droit de chacune des extrémités du soufflet (28) se trouve au droit de la jonction respective (40A, 40B) formée par les extrémités radiales (36) du diaphragme axialement le plus à l'extérieur (32A, 32B) respectif et du diaphragme adjacent suivant (32) ce par quoi chacun des diaphragmes axialement le plus à l'extérieur (32A, 32B) sert de diaphragme inactif au droit des extrémités opposées respectives du soufflet (28), l'un de ces diaphragmes inactifs (32A) étant adjacent audit moyen de liaison (24) et l'autre de ces diaphragmes inactifs (32B) étant adjacents à la bague d'étanchéité mobile en rotation (18).

4. Ensemble d'étanchéité mécanique du type à soufflet selon la revendication 3, dans lequel chacune des jonctions respectives (40A, 40B) est une jonction radialement extérieure (40A, 40B) formée par les extrémités radialement extérieures (36) du diaphragme axialement le plus à l'extérieur (32A, 32B) et du diaphragme adjacent suivant (32), chacun des diaphragmes axialement les plus à l'extérieur (32A, 32B) ayant une extrémité radialement intérieure libre (34A, 34B) et servant par-là de diaphragme inactif.

5. Ensemble d'étanchéité mécanique du type à soufflet selon la revendication 3 ou la revendication 4, dans lequel le soufflet (28) est soudé, au droit de sa dite une extrémité, au moyen de liaison (24) et, au droit de sa dite autre extrémité, au moyen (30) relié à la bague d'étanchéité mobile en rotation (18).

6. Ensemble d'étanchéité mécanique du type à soufflet selon la revendication 3 ou la revendication 4, comprenant de plus une virole cylindrique (30) entourant et reliant la bague d'étanchéité mobile en rotation (18), le soufflet (28) étant relié au droit de sa dite autre extrémité à la virole (30).
